# EUROPEAN PATENT APPLICATION

(11) **EP 4 804 584 A1**
(43) Date of publication of application: **09.09.2026**
(21) Application number: 23957628.3
(22) Date of filing: 01.11.2023
(51) Int. Cl.: H04W 12/084, H04L 9/32

(54) **NETWORK NODE, TERMINAL, AND COMMUNICATION METHOD**

(71) Applicant: NTT DOCOMO, INC., Tokyo 100-6150 (JP); NTT, Inc., Tokyo 100-8116 (JP)
(72) Inventor: YAMAUCHI, Kenta, Tokyo 100-6150 (JP); KUROIWA, Fumito, Tokyo 100-6150 (JP); HIGO, Naoki, Musashino-shi, Tokyo 180-8585 (JP); MAEDA, Hiroaki, Musashino-shi, Tokyo 180-8585 (JP); MATSUMOTO, Arifumi, Musashino-shi, Tokyo 180-8585 (JP)
(74) Representative: Hoffmann Eitle
(86) International application number: PCT/JP2023/039372
(87) International publication number: WO 2025/094300

(57) **Abstract**

A network node includes a transmission unit configured to transmit, to a terminal of a user, first authentication information used in authentication of the user having a line contract; a reception unit configured to receive, from a network node of a service provider, a message transmission request including second authentication information transmitted by the terminal and a token generated by the network node of the service provider; and a control unit configured to identify the user and a telephone number of the user based on the first authentication information and the second authentication information, wherein the transmission unit uses the telephone number to transmit a message including the token to the terminal.

## Description

### TECHNICAL FIELD

The present invention relates to a network node, terminal, and communication method in a communication system.

### BACKGROUND ART

In the 3GPP (Registered Trademark) (3rd Generation Partnership Project), a radio communication system (hereinafter, this radio communication system is referred to as "5G" or "NR") referred to as 5G or NR (New Radio) is being studied in order to implement further increase in system capacity, further increase in data transmission speed, and further decrease in delay in a radio section. In 5G, various radio technologies are being studied in order to satisfy the requirements of reducing the delay in a radio section to 1 ms or less while implementing a throughput of 10 Gbps or more.

In NR, a network architecture including 5GC (5G Core Network) corresponding to EPC (Evolved Packet Core) which is a core network in LTE (Long Term Evolution) network architecture and NG-RAN (Next Generation-Radio Access Network) corresponding to E-UTRAN (Evolved Universal Terrestrial Radio Access Network) which is a RAN (Radio Access Network) in LTE network architecture, is being studied (e.g., Non-Patent Literature 1).

In recent years, as a new identity management in a network, a concept and implementation technology (W3C Decentralized Identifiers (DID), W3C Verifiable Credentials (VC), etc.) of self-sovereign identity (SSI) in which a user manages his/her own identifier and identity by himself/herself without depending on a centralized identity provider (ID provider) or the like and controls the provision destination, are being studied.

### CITATION LIST

### Non-Patent Literature

Non-Patent Literature 1: 3GPP TS 23.501 V18.2.2(2023-07)

### SUMMARY OF INVENTION

### TECHNICAL PROBLEM

At present, SMS (Short Message Service) authentication is used as a personal authentication method when using a service. In the SMS authentication, authentication of a person who can make a line contract (a person whose identity is confirmed by a communication carrier) or a related person of the person is performed, and authentication of a person who possesses a terminal in which a SIM associated with a telephone number is activated is performed.

However, in the SMS authentication, because the telephone number, which is personal information of the user, needs to be notified to the service provider, there is a safety problem such as a risk of leakage of personal information of the user from the service provider.

The present invention has been made in view of the above, and it is an object of the present invention to perform secure personal authentication in a communication system.

### SOLUTION TO PROBLEM

According to the disclosed technology, there is provided a network node including a transmission unit configured to transmit, to a terminal of a user, first authentication information used in authentication of the user having a line contract; a reception unit configured to receive, from a network node of a service provider, a message transmission request including second authentication information transmitted by the terminal and a token generated by the network node of the service provider; and a control unit configured to identify the user and a telephone number of the user based on the first authentication information and the second authentication information, wherein the transmission unit uses the telephone number to transmit a message including the token to the terminal.

### ADVANTAGEOUS EFFECTS OF INVENTION

According to the disclosed technology, secure identity authentication can be performed in a communication system.

### BRIEF DESCRIPTION OF DRAWINGS

[FIG. 1] FIG. 1 illustrates an example of a communication system.
[FIG. 2] FIG. 2 illustrates an example of a communication system under a roaming environment.
[FIG. 3] FIG. 3 illustrates an example of a sequence diagram relating to an SMS authentication method according to an embodiment of the present invention.
[FIG. 4] FIG. 4 illustrates an example of a sequence diagram relating to a first authentication method using VC according to an embodiment of the present invention.
[FIG. 5] FIG. 5 illustrates an example of a sequence diagram relating to a second authentication method using VC according to an embodiment of the present invention.
[FIG. 6] FIG. 6 is a diagram comparing authentication methods according to an embodiment of the present invention.
[FIG. 7] FIG. 7 shows an example of a functional configuration of a base station 10 and a network node 30 according to an embodiment of the present invention.
[FIG. 8] FIG. 8 shows an example of a functional configuration of a terminal 20 according to an embodiment of the present invention.
[FIG. 9] FIG. 9 shows an example of a hardware configuration of the base station 10, the terminal 20, and the network node 30 according to an embodiment of the present invention.
[FIG. 10] FIG. 10 shows an example of a configuration of a vehicle 2001 according to an embodiment of the present invention.

### DESCRIPTION OF EMBODIMENTS

Hereinafter, an embodiment of the present invention will be described with reference to the drawings. Note that the embodiments described below are only examples, and the embodiments to which the present invention is applied are not limited to the following embodiments.

In the operation of the radio communication system according to the embodiment of the present invention, existing technology is appropriately used. The existing technology is, for example, an existing LTE, but is not limited to the existing LTE. The term "LTE" as used herein has a broad meaning including LTE-Advanced, a system after LTE-Advanced (e.g., NR), or a radio LAN (Local Area Network) unless otherwise specified.

In the embodiment of the present invention, "configure" a radio parameter or the like may mean that a predetermined value is pre-configured or that a radio parameter notified from the network node 30 or the terminal 20 is configured.

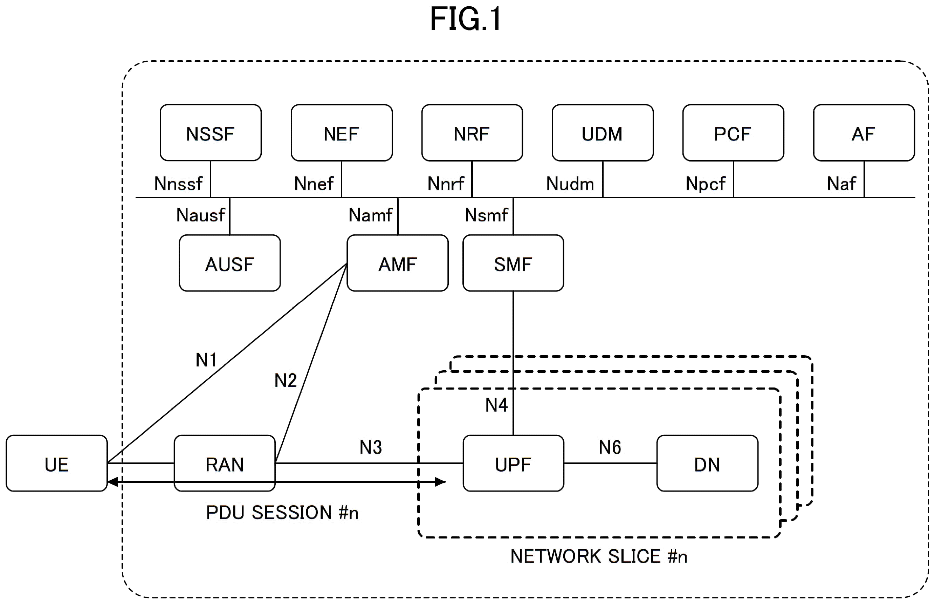

FIG. 1 is a diagram for explaining an example of a communication system. As shown in FIG. 1, the communication system includes a UE as a terminal 20 and a plurality of network nodes 30. Hereinafter, it is assumed that one network node 30 corresponds to each function, but a plurality of functions may be implemented by one network node 30 or a plurality of network nodes 30 may implement one function. Further, the "connection" described below may be a logical connection or a physical connection.

A RAN (Radio Access Network) is a network node 30 having a radio access function, may include a base station 10, and is connected to a UE, an AMF (Access and Mobility Management Function), and a UPF (User plane function). The AMF is a network node 30 having functions such as termination of a RAN interface, termination of a NAS (Non-Access Stratum), registration management, connection management, reachability management, and mobility management. The UPF is a network node 30 having functions such as a PDU (Protocol Data Unit) session point to the outside interconnected with a DN (Data Network), packet routing and forwarding, and QoS (Quality of Service) handling of a user plane. The UPF and the DN constitute a network slice. In the radio communication network according to the embodiment of the present invention, a plurality of network slices are constructed.

AMF is connected to UE, RAN, Session Management function (SMF), Network Slice Selection Function (NSSF), Network Exposure Function (NEF), Network Repository Function (NRF), Unified Data Management (UDM), Authentication Server Function (AUSF), Policy Control Function (PCF), and Application Function (AF).AMF, SMF, NSSF, NEF, NRF, UDM, AUSF, PCF, and AF are network nodes 30 connected to each other via interfaces based on their respective services, Namf, Nsmf, Nnssf, Nnef, Nnrf, Nudm, Nausf, Npcf, and Naf.

The SMF is a network node 30 having functions such as session management, IP (Internet Protocol) address assignment and management of UEs, Dynamic Host Configuration Protocol (DHCP) functions, Address Resolution Protocol (ARP) proxies, and roaming functions. NEF is a network node 30 having a function of notifying capabilities and events to other NFs (Network Function). NSSF is a network node 30 having a function of selecting a network slice to which UE connects, determining an allowed NSSAI (Network Slice Selection Assistance Information), determining an NSSAI to be set, determining an AMF set to which UE connects, etc. PCF is a network node 30 having a function of performing policy control of a network. AF is a network node 30 having a function of controlling an application server. NRF is a network node 30 having a function of discovering an NF instance providing a service. UDM is a network node 30 managing subscriber data and authentication data. UDM is connected to a User Data Repository (UDR) holding the data. UDM may also have an ARPF (Authentication credential Repository and Processing Function) having a function of processing and managing authentication information and a SIDF (Subscription Identifier Deconcealing Function) having a function of decrypting encrypted identification information. Alternatively, UDM may perform these functions by accessing another network node having an ARPF or SIDF.

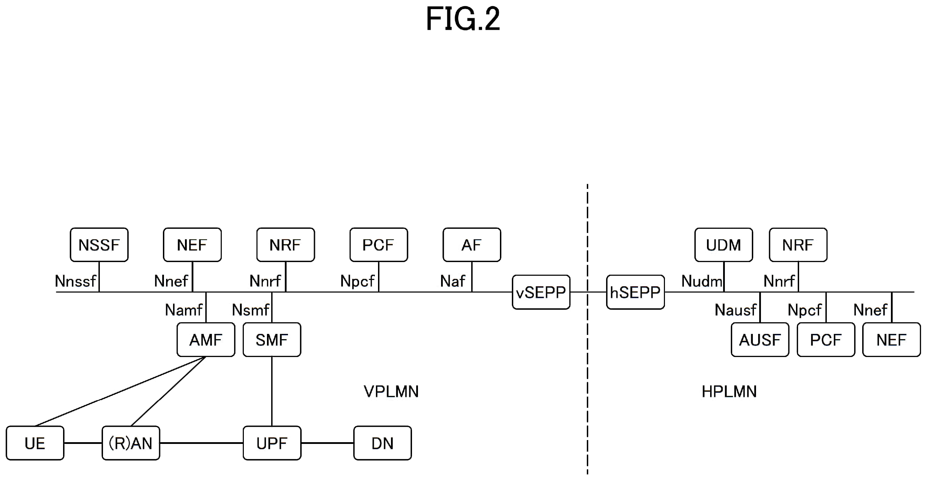

FIG. 2 is a diagram for explaining an example of a communication system under a roaming environment. As shown in FIG. 2, a network is composed of a UE which is a terminal 20 and a plurality of network nodes 30. Hereinafter, it is assumed that one network node 30 corresponds to each function, but a plurality of functions may be implemented by one network node 30, or a plurality of network nodes 30 may implement one function. Further, "connection" described below may be a logical connection or a physical connection.

A RAN is a network node 30 having a radio access function, and is connected to a UE, an AMF, and a UPF. The AMF is a network node 30 having functions such as termination of a RAN interface, termination of a NAS, registration management, connection management, reachability management, and mobility management. The UPF is a network node 30 having functions such as a PDU session point to the outside interconnected with the DN, routing and forwarding of packets, and QoS handling of a user plane. The UPF and the DN constitute a network slice. In the radio communication network according to the embodiment of the present invention, a plurality of network slices are constructed.

The AMF is connected to UE, RAN, SMF, NSSF, NEF, NRF, UDM, AUSF, PCF, AF and SEPP (Security Edge Protection Proxy). AMF, SMF, NSSF, NEF, NRF, UDM, AUSF, PCF, and AF are network nodes 30 connected to each other via interfaces based on their respective services, namely, Namf, Nsmf, Nnssf, Nnef, Nnrf, Nudm, Nausf, Npcf, and Naf.

SMF is a network node 30 having functions such as session management, IP address assignment and management of UE, DHCP function, ARP proxy, roaming function, etc. NEF is a network node 30 having functions to notify capabilities and events to other NFs. NSSF is a network node 30 having functions such as selecting a network slice to which UE connects, determining an allowed NSSAI, determining an NSSAI to be set, determining an AMF set to which UE connects, etc. PCF is a network node 30 having functions to perform policy control of a network. AF is a network node 30 having functions to control an application server. NRF is a network node 30 having functions to discover an NF instance to provide a service. SEPP is an opaque proxy that filters control plane messages between Public Land Mobile Networks (PLMNs). vSEPP shown in FIG. 2 is SEPP in the visited network, and hSEPP is SEPP in the home network.

As shown in FIG. 2, UE is in a roaming environment connected to RAN and AMF in VPLMN (Visited PLMN). VPLMN and HPLMN (Home PLMN) are connected via vSEPP and hSEPP. UE can communicate with UDM of HPLMN via AMF of VPLMN, for example.

### (First Embodiment)

In the first embodiment, a method for performing secure identity authentication in a communication system will be described.

### (SMS Authentication Method)

In a service in a network, SMS (Short Message Service) authentication is a method for executing personal authentication. In SMS authentication, authentication of a person who can make a line contract (a person whose identity is confirmed by a communication carrier) or a related person of the person is performed, and authentication of a person who owns a terminal in which a SIM associated with a telephone number is activated is performed.

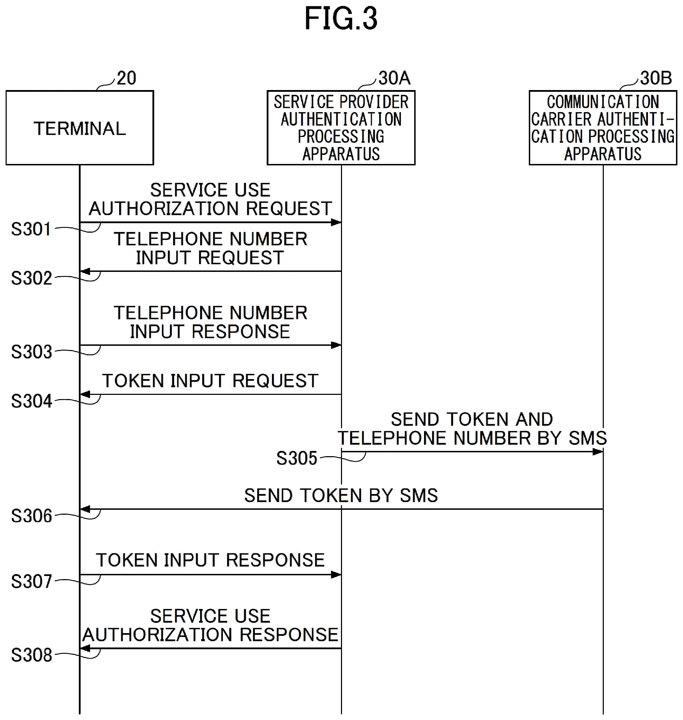

FIG. 3 is a diagram showing an example of a sequence diagram of an SMS authentication method according to an embodiment of the present invention. In this sequence, processing is executed among a terminal 20 owned by a user to be authenticated, an authentication processing apparatus (network node 30A) for executing processing related to personal authentication managed by a service provider, and an authentication processing apparatus (network node 30B) for executing processing related to personal authentication managed by a communication carrier. The processing of each step of FIG. 3 will be described below.

Step S301: The terminal 20 transmits a service use authorization request to the network node 30A.

Step S302: The network node 30A transmits a telephone number input request to the terminal 20.

Step S303: The terminal 20 transmits a telephone number input response including the telephone number of the terminal 20 to the network node 30A.

Step S304: The network node 30A transmits a token input request to the terminal 20. Based on the received request, the terminal 20 displays a sentence such as "Please enter the passcode received by SMS" on the screen of the terminal 20.

Step S305: The network node 30A generates a token (for example, a six-digit random number) and transmits the telephone number of the terminal 20 received in step S303 and the generated token to the telephone number of the network node 30B by SMS (that is, sends the short message (SM) including the telephone number and the token).

Step S306: The network node 30B transmits the token received in step S305 to the telephone number of the terminal 20 by SMS (that is, sends an SM including the token). The terminal 20 displays the received token on the screen of the terminal 20.

Step S307: The terminal 20 receives an operation by a user to input a token. Further, the terminal 20 transmits a token input response including the token input by the user, to the network node 30A. The network node 30A executes authentication of the user by confirming whether or not the received token matches the token transmitted in step S305.

Step S308: If authentication of the user is successful in step S307, the network node 30A transmits a service use authorization response to the terminal 20.

According to the SMS authentication method described above, the identity of the user who owns the terminal associated with the telephone number can be confirmed. However, in the SMS authentication method, the telephone number of the user is disclosed to the service provider. In addition, there is a possibility that SMS authentication may be performed by proxy by a malicious third party pretending to be a service provider.

### (First Authentication Method Using VC)

An authentication method using verifiable authentication information (Verifiable Credentials, VC) based on a technology (W3C Decentralized Identifiers (DID), W3C Verifiable Credentials (VC), etc.) for implementing a self-sovereign identity (SSI) will be described. In SSI, there are three parties: a Holder such as a user who manages and holds his/her digital identity; an Issuer who issues an attribute and a qualification certificate (VC) after proving the attribute information (name, age, address, etc.) and the qualification information (being an employee of an enterprise, being a member of a service, etc.) of the Holder; and a Verifier who verifies the attribute and the qualification of the Holder by requesting and receiving the attribute and the qualification certificate (VC) necessary for providing the service from the Holder, and determines the provision of the service.

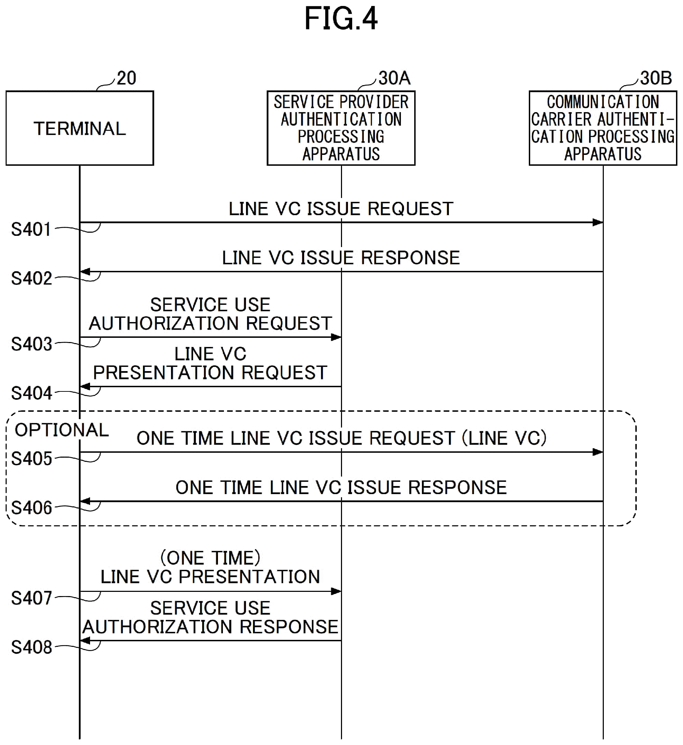

FIG. 4 is a diagram showing an example of a sequence diagram of the first authentication method using VC according to the embodiment of the present invention. In this authentication method, VC is used instead of SMS to confirm that the user has a line contract. In this sequence, a process is executed between a terminal 20 owned by a user to be authenticated, an authentication processing apparatus (network node 30A) which executes a process related to authentication of the user managed by a service provider, and an authentication processing apparatus (network node 30B) which executes a process related to authentication of the user managed by a communication carrier. The process of each step of FIG. 4 will be described below.

Step S401: The terminal 20 transmits a line VC issue request to the network node 30B. The line VC is authentication information used for authentication of the user of the terminal 20 having the line contract.

Step S402: The network node 30B generates a line VC including information about the user (for example, user ID), and assigns the electronic signature of the communication carrier to the line VC by using the private key of the communication carrier. Further, the network node 30B may include, in the line VC, information acquired from the user in advance and owned only by the user (for example, information associated with a DID signed by a user's private key). The network node 30B transmits, to the terminal 20, a line VC issue response including the line VC to which the electronic signature of the communication carrier is assigned.

Step S403: The terminal 20 transmits a service authorization request to the network node 30A.

Step S404: The network node 30A transmits a line VC presentation request to the terminal 20.

Steps S405 and S406 are (optional) processes that the user can select whether or not to execute as required.

Step S405: The terminal 20 transmits, to the network node 30B, a one-time line VC issuance request including the line VC received in step S402. The one-time line VC is a line VC to which a usage frequency limit or a usage expiration date is set. The network node 30B confirms that the received line VC is a line VC issued to the terminal 20.

Step S406: The network node 30B generates a one-time line VC and assigns the electronic signature of the communication carrier to the one-time line VC by using the private key of the communication carrier. The network node 30B transmits, to the terminal 20, a one-time line VC issuance response including the one-time line VC to which the electronic signature of the communication carrier is assigned.

Step S407: The terminal 20 assigns the user's electronic signature to the line VC received in step S402 by using the user's private key. Further, the terminal 20 transmits, to the network node 30A, the line VC including the electronic signature of the communication carrier and the electronic signature of the user. When steps S405 and S406 are executed, the one-time line VC is used instead of the line VC in the processing of step S407. Further, the terminal 20 sets a usage frequency limit or an expiration date for the one-time line VC.

The network node 30A confirms the validity of the received line VC. Here, the line VC issued to the terminal 20 by the network node 30B (communication carrier) that is an issuer is provided to the network node 30A (service provider) that is a verifier. Accordingly, the network node 30A can confirm the validity of the line VC by confirming whether the line VC received from the terminal 20 matches the provided line VC. Further, the line VC is anonymized information in which a third party other than the issuer and the verifier cannot identify the user by using the line VC.

The network node 30A confirms the validity of the electronic signature of the communication carrier attached to the received line VC by using the public key of the communication carrier.

The network node 30A confirms the validity of the electronic signature of the user attached to the received line VC by using the public key of the user.

The network node 30A executes authentication of the user by confirming the validity of the line VC, the validity of the electronic signatures of the communication carrier and the user, and when the one-time line VC is used, the usage frequency limit or the expiration date (whether the usage frequency limit has been exceeded or the expiration date has passed).

Step S408: If authentication of the user is successful in step S407, the network node 30A transmits a request for presenting the line VC to the terminal 20.

In the first authentication method using the VC described above, it is possible to prevent disclosure of the telephone number of the user to the service provider, but it is not possible to confirm that the user owns the terminal associated with the telephone number.

### (Second Authentication Method Using VC)

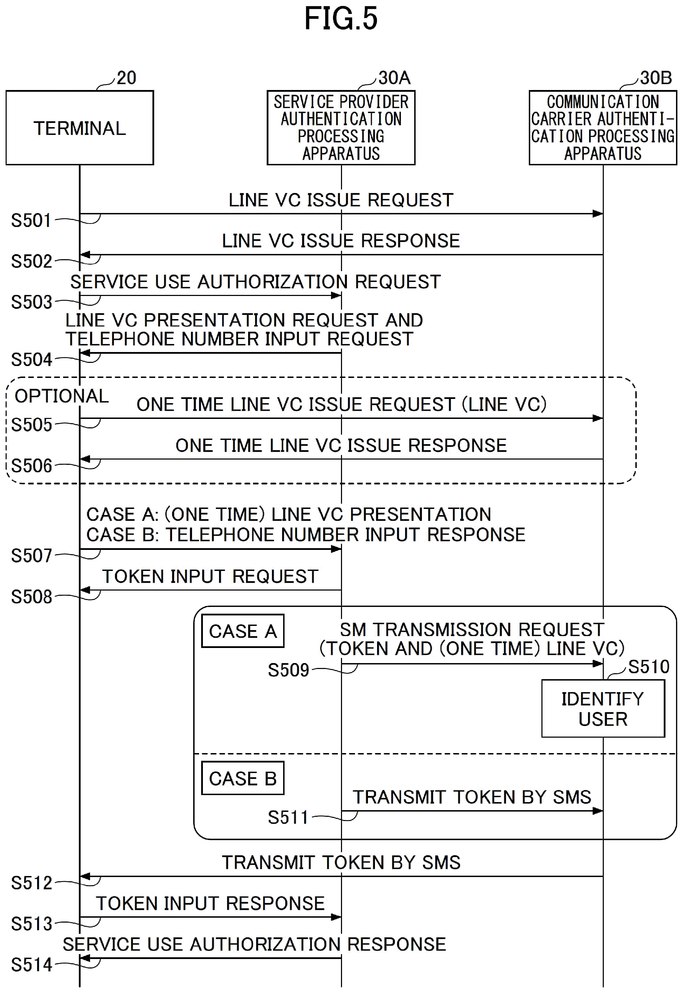

A second authentication method using VC will be described. In the second authentication method, a mechanism for electronically certifying attribute information associated with an individual such as VC is used to implement identity authentication equivalent to the SMS authentication method without requiring the user to present a telephone number to the service provider. FIG. 5 is a diagram showing an example of a sequence diagram relating to the second authentication method using VC in the embodiment of the present invention. In this authentication method, SMS and VC are used to confirm that the user has a line contract. In this sequence, processing is executed between a terminal 20 owned by the user to be authenticated, an authentication processing apparatus (the network node 30A) for executing processing relating to identity authentication managed by the service provider, and an authentication processing apparatus (the network node 30B) for executing processing relating to identity authentication managed by the communication carrier. The processing of each step of FIG. 5 will be described below.

The processing of steps S501 to S503 is the same as the processing of steps S401 to S403 of FIG. 4.

Step S504: The network node 30A transmits, to the terminal 20, a message including the electronic signature and/or the decentralized identifier (DID) of the service provider in addition to the line VC presentation request and the telephone number input request. The terminal 20 may confirm the validity of the electronic signature of the service provider included in the received message. Based on the received message, the terminal 20 displays a sentence such as "please present the line VC or enter the telephone number" on the screen of the terminal 20.

Steps S505 and S506 are (optional) processes that the user can select whether or not to execute as needed, and are similar to steps S405 and S406 in FIG. 4, respectively.

Step S507: The terminal 20 receives an operation for instructing the presentation of the line VC by the user (case A) or an operation for instructing the transmission of the telephone number input response (case B).

In case A, the terminal 20 generates a message in which the electronic signature of the service provider and/or the decentralized identifier received in step S504 are added to the line VC received in step S502, and assigns, to the message, an electronic signature signed by using the user's private key. Further, the terminal 20 transmits, to the network node 30A, the message including the electronic signature of the communication carrier, the electronic signature of the user, and the electronic signature of the service provider. Here, when steps S505 and S506 are executed, the one-time line VC received in step S506 is used instead of the line VC. Further, the terminal 20 sets a usage frequency limit or an expiration date for the one-time line VC.

In case B, the terminal 20 receives an operation for inputting a telephone number by the user and transmits, to the network node 30A, a telephone number input response including the input telephone number.

Step S508: The network node 30A transmits a token input request to the terminal 20. Further, the network node 30A generates a token (for example, a six-digit random number).

In the following steps S509 to S511, if the terminal 20 transmitted the (one-time) line VC to the network node 30A in step S507 (case A), steps S509 and S510 are executed, and if the terminal 20 transmitted the telephone number input response (case B), step S511 is executed.

Step S509: The network node 30A transmits an SMS transmission request to network node 30B. The request message includes a token, a (one-time) line VC, a user's electronic signature, and a service provider's electronic signature and/or decentralized identifier.

Step S510: The network node 30B identifies the user of terminal 20 by confirming that the (one-time) line VC transmitted to terminal 20 matches the (one-time) line VC received from terminal 20.

Further, the network node 30B identifies the telephone number of terminal 20 based on the identified user. For example, network node 30B identifies the telephone number of terminal 20 by referring to the subscriber data of the identified user.

Further, the network node 30B may confirm the validity of the electronic signature of the user received in step S509 by using the public key of the user. Alternatively, the validity of the user may be confirmed based on whether or not it is a line VC to which information (such as session binding) known only by the user is given.

Further, the network node 30B confirms the validity of the electronic signature of the service provider by using the public key of the service provider and/or confirms the validity of the service provider by using the decentralized identifier.

When the one-time line VC is received, the network node 30B confirms the validity of the one-time line VC by confirming the usage frequency limit or the expiration date set in the one-time line VC (whether the usage frequency limit has been exceeded or the expiration date has passed).

When the user cannot be identified (cases where the line VC does not match, the electronic signature of the communication carrier, the user, and the service provider is not valid, the expiration date of the one-time line VC is not valid, etc.), the network node 30B sends a response indicating that the user identification has failed to the network node 30A, and ends the process related to the authentication process in this sequence diagram.

Step S511: The network node 30A transmits the telephone number of the terminal 20 received in step S507 and the token generated in step S508 (that is, sends SM including the telephone number and the token) to the telephone number of the network node 30B by SMS.

Step S512: The network node 30B transmits (that is, send SM including the token) the token received in step S509 or S511 to the telephone number of the terminal 20 by SMS. The terminal 20 displays the received token on the screen of the terminal 20.

Step S513: The terminal 20 receives an operation by the user to input the token. Further, the terminal 20 transmits, to the network node 30A, a token input response including the token input by the user. The network node 30A confirms whether or not the received token matches the token transmitted in step S509 or S511, thereby authenticating the user.

Step S514: If the authentication of the user is successful in step S513, the network node 30A transmits a service use authorization response to the terminal 20.

In the second authentication method using the VC described above (case A of step S507), the identity authentication can be executed without disclosing the telephone number of the user to the service provider.

Further, in the second authentication method, by including useful additional information associated with the line contract (such as the term of the line contract) in the line VC, it is possible to perform identity authentication by taking the additional information into consideration.

Further, in the second authentication method, when the service provider transmits the line VC presentation request and the telephone number input request to the user, additional information added with the electronic signature and/or decentralized identifier of the service provider is transmitted. Thus, the communication carrier can confirm the validity of the service provider, and it is possible to prevent a malicious third party from transmitting a message to the user by SMS on behalf of the service provider (that is, the binding of the service provider that is the SM sender).

Further, in this embodiment, in addition to the token being transmitted by SMS for the purpose of service use approval, information other than the token (for example, notifications regarding the use of services) may be transmitted by SMS, and the expiration date of the one-time line VC may be set longer for transmission of the information. Alternatively, by setting the expiration date of the one-time line VC shorter or limiting the usage frequency limit (e.g., once only), even if the line VC is leaked from the service provider and the private key or the like of the service provider is leaked, it is possible to reduce the possibility that a malicious third party can transmit an SMS.

Further, in this embodiment, a telephone number is used as an identifier (ID) and locator that the communication carrier issues to the user, but an e-mail address or the like may be used in addition to the telephone number.

Further, although an electronic identifier (ID) and a locator are used in this embodiment, it is also possible to apply an address or the like. The communication carrier has information about the address of the user based on the contract information. For example, when the service provider wants to deliver a document such as a contract to the user instead of a token, the service provider mails by post, to the communication carrier, a document enclosing information (such as a two-dimensional code) related to the (one-time) line VC acquired from the user. The communication carrier mails by post, to the address of the user, the received document. For example, the network node 30 of the communication carrier analyzes the two-dimensional code read by a scanner or the like to acquire information related to the line VC, identifies the user based on the acquired information, and identifies the address of the user based on the contract information of the identified user. Thus, the user can receive the document from the service provider without presenting the address to the service provider.

### (Comparison of Authentication Systems)

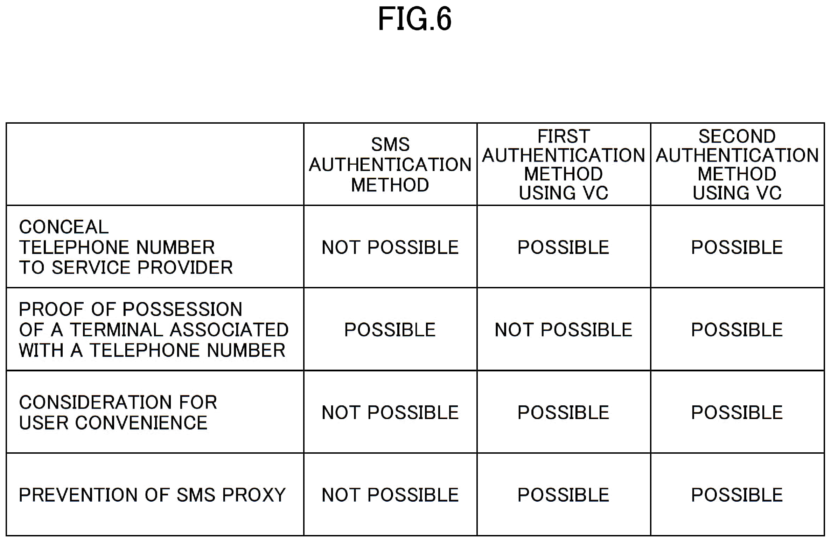

FIG. 6 is a diagram for comparing authentication systems in the embodiment of the present invention. As shown in FIG. 6, with regard to "proof of possession of a terminal associated with a telephone number", the SMS authentication method is not possible, but the first and second authentication methods using VC are possible. With regard to "proof of possession of a terminal associated with a telephone number", the SMS authentication method in which a token is sent to the terminal by SMS and the second authentication method are possible, but the first authentication method is not possible. With regard to "consideration for user convenience", the SMS authentication method is not possible because authentication information other than a token cannot be selected and the usage frequency and the expiration date of use of authentication information cannot be set, but the first and second authentication methods using VC are possible. With regard to "prevention of SMS proxy", the SMS authentication method is not possible, but the first and second authentication methods using VC are possible (prevention is possible because a third party cannot obtain the VC). Furthermore, in the second authentication method, prevention is possible by using an electronic signature of a communication carrier.

According to the embodiments described above, secure identity authentication can be performed in a communication system. In addition, identity authentication that can prove possession of a terminal associated with a telephone number can be performed without presenting the telephone number of the user to a service provider.

### (Device Configuration)

Next, an example of the functional configuration of the base station 10, the network node 30, and the terminal 20 for performing the processes and operations described above will be described. The base station 10, the network node 30, and the terminal 20 include functions for performing the above-described embodiments. However, the base station 10, the network node 30, and the terminal 20 may each include only some of the functions in the embodiments.

### <Base Station 10 and Network Node 30>

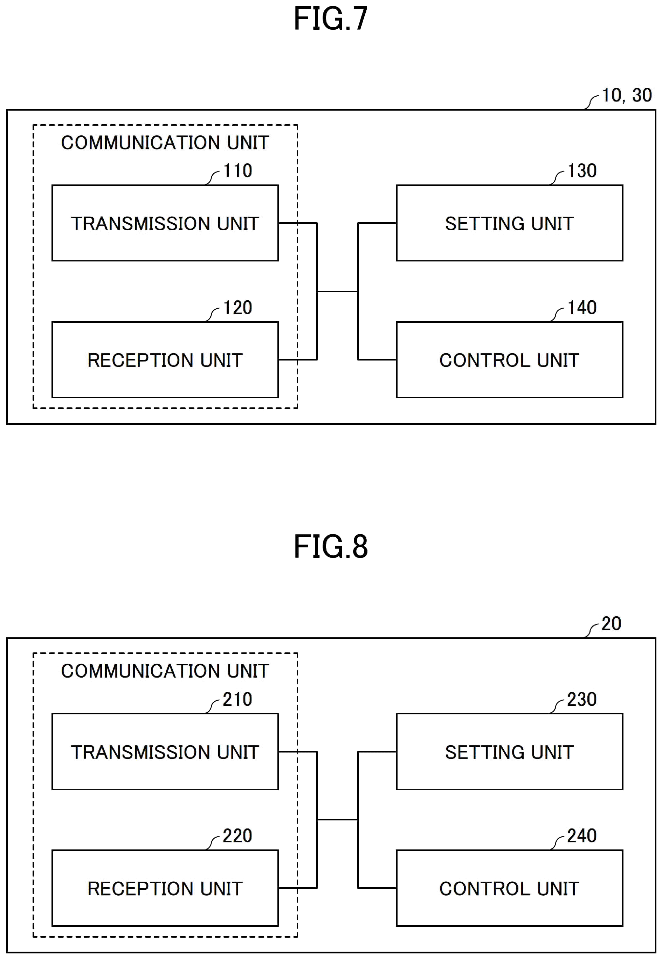

FIG. 7 is a diagram showing an example of the functional configuration of the base station 10 and the network node 30. As shown in FIG. 7, the base station 10 includes a transmission unit 110, a reception unit 120, a setting unit 130, and a control unit 140. The functional configuration shown in FIG. 7 is only an example. As long as the operation according to the embodiment of the present invention can be performed, the functional classification and the name of the functional unit may be any. The network node 30 may have the same functional configuration as that of the base station 10. The network node 30 having a plurality of different functions on the system architecture may include a plurality of network nodes 30 separated for each function.

The transmission unit 110 includes a function of generating a signal to be transmitted to the terminal 20 or another network node 30 and transmitting the signal by wire or radio. The reception unit 120 includes a function of receiving various signals transmitted from the terminal 20 or another network node 30 and acquiring, for example, information of a higher layer from the received signal. A communication unit including the transmission unit 110 and the reception unit 120 may be configured.

The setting unit 130 stores setting information to be set in advance and various kinds of setting information to be transmitted to the terminal 20 in a storage device and reads out the setting information from the storage device as necessary.

The control unit 140 performs processing related to identity authentication and the like as described in the embodiment. The control unit 140 performs processing related to communication with the terminal 20. A functional unit related to signal transmission in the control unit 140 may be included in the transmission unit 110, and a functional unit related to signal reception in the control unit 140 may be included in the reception unit 120.

### <Terminal 20>

FIG. 8 is a diagram showing an example of a functional configuration of the terminal 20. As shown in FIG. 8, the terminal 20 includes a transmission unit 210, a reception unit 220, a setting unit 230, and a control unit 240. The functional configuration shown in FIG. 8 is only an example. As long as the operation according to the embodiment of the present invention can be performed, the functional classification and the name of the functional unit may be any. Further, the communication apparatus serving as the resource holder 20 may have the same functional configuration as the terminal 20.

The transmission unit 210 creates a transmission signal from the transmission data and transmits, by radio, the transmission signal. The reception unit 220 receives, by radio, various signals and acquires a signal of a higher layer from the received signal of a physical layer. The reception unit 220 also has a function of receiving a control signal or a reference signal transmitted from the network node 30. A communication unit including the transmission unit 210 and the reception unit 220 may be configured.

The setting unit 230 stores various kinds of setting information received from the network node 30 by the reception unit 220 in a storage device and reads out the setting information from the storage device as necessary. The setting unit 230 also stores setting information to be set in advance.

The control unit 240 performs processing related to identity authentication and the like as described in the embodiment. A functional unit related to signal transmission in the control unit 240 may be included in the transmission unit 210, and a functional unit related to signal reception in the control unit 240 may be included in the reception unit 220.

### (Hardware structure)

The block diagrams that have been used to describe the above embodiments (FIG. 7 and FIG. 8) show blocks in functional units. These functional blocks (components) may be implemented in arbitrary combinations of at least one of hardware or software. Also, the method for implementing each functional block is not particularly limited. That is, each functional block may be implemented by one piece of apparatus that is physically or logically coupled, or may be implemented by directly or indirectly connecting two or more physically or logically separate pieces of apparatus (for example, via wire, radio, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception unit, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmission unit or a transmitter. The method for implementing each component is not particularly limited as described above.

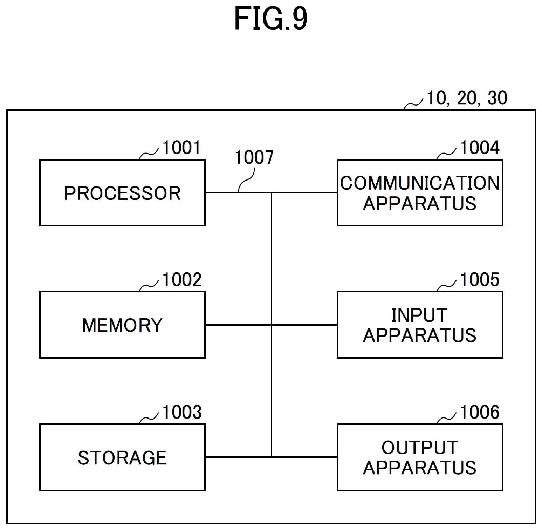

For example, the base station 10, the network node 30, the terminal 20, etc., according to an embodiment of the present disclosure may function as a computer for processing the radio communication method of the present disclosure. FIG. 9 is a diagram to show an example of a hardware structure of the base station 10 and the terminal 20 according to one embodiment. The network node 30 may have the same hardware configuration as the base station 10. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses illustrated in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in FIG. 7 may be implemented by control programs that are stored in the memory 1002 and that operate on the processor 1001. Further, for example, the control unit 240 of the terminal 20 illustrated in FIG. 8 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus) " and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or radio networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to implement, for example, at least one of frequency division duplex (FDD) or time division duplex (TDD). For example, the transmitting/receiving antenna, the amplifier unit, the transmitting/reception unit, the transmission line interface, and the like, may be implemented by the communication apparatus 1004. The transmitting/reception unit may be physically or logically divided into a transmission unit and a reception unit.

The input apparatus 1005 is an input device that receives input from the outside (for example, a keyboard, a mouse, a microphone, a switch, a button, a sensor, and so on). The output apparatus 1006 is an output apparatus that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

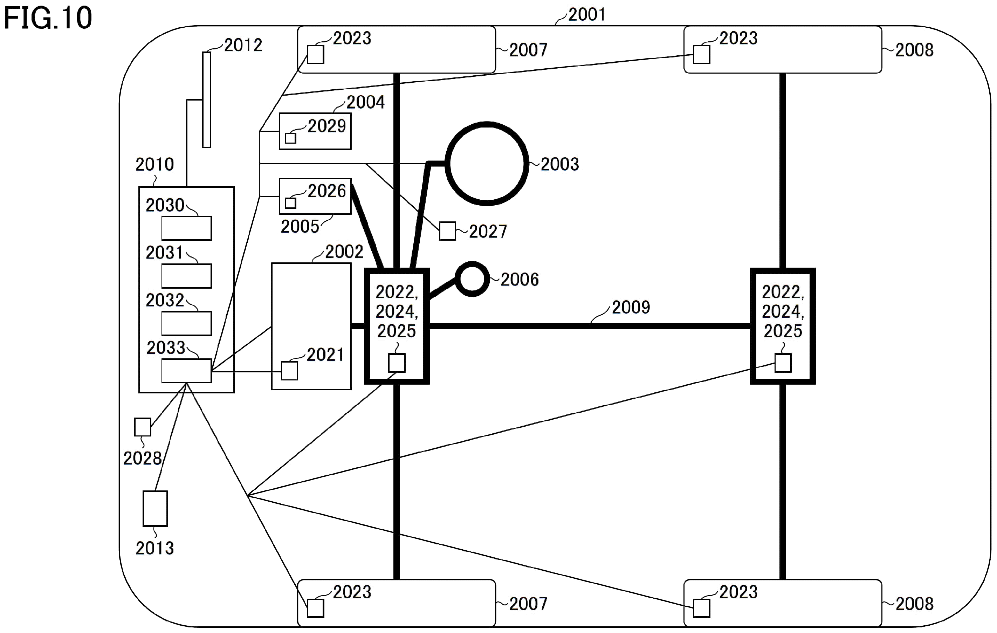

FIG. 10 illustrates an example of a configuration of a vehicle 2001. As illustrated in FIG. 10, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. Further, the driving support system unit 2030 transmits and receives various types of information via the communication module 2013 to implement a driving support function or an autonomous driving function.

The communication module 2013 can communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using radio communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH) ). Further, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Summary of Embodiments)

As described above, according to an embodiment of the present invention, there is provided a network node including:
a transmission unit configured to transmit, to a terminal of a user, first authentication information used in authentication of the user having a line contract;
a reception unit configured to receive, from a network node of a service provider, a message transmission request including second authentication information transmitted by the terminal and a token generated by the network node of the service provider; and
a control unit configured to identify the user and a telephone number of the user based on the first authentication information and the second authentication information, wherein
the transmission unit uses the telephone number to transmit a message including the token to the terminal.

According to the above configuration, secure identity authentication can be performed in the communication system.

The message transmission request may further include an electronic signature of the network node of the service provider appended to the second authentication information, and the control unit may confirm whether the service provider is valid based on the electronic signature.

According to the above configuration, secure identity authentication can be performed in the communication system.

The message transmission request may further include a decentralized identifier of the service provider, and the control unit may confirm whether the service provider is valid based on the decentralized identifier.

With the above configuration, secure identity authentication can be performed in the communication system.

The transmission unit may transmit, to the terminal of the user, third authentication information used in the authentication of the user in which a usage frequency or an expiration date is set,
the reception unit may receive, from the network node of the service provider, the message transmission request including fourth authentication information and the token generated by the network node of the service provider, the fourth authentication information being information in which the usage frequency or the expiration date is set by the user, and
the control unit may identify the user and the telephone number of the user based on the third authentication information and the fourth authentication information.

With the above configuration, secure identity authentication can be performed in the communication system.

The first authentication information may include information held only by the user.

According to the foregoing configuration, secure identity authentication can be performed in a communication system.

Further, according to an embodiment of the present invention, there is provided
a terminal including:
a reception unit configured to receive, from a network node of a communication carrier, authentication information used in authentication of a user having a line contract; and
a transmission unit configured to transmit the authentication information to a network node of a service provider, wherein
the reception unit for receives, from the network node of the communication carrier, a message including a token generated by the network node of the service provider, and
the transmission unit transmits the token to the network node of the service provider.

According to the foregoing configuration, secure identity authentication can be performed in a communication system.

Further, according to an embodiment of the present invention, there is provided a communication method executed by a network node, the communication method including:
transmitting, to a terminal of a user, first authentication information used in authentication of the user having a line contract;
receiving, from a network node of a service provider, a message transmission request including second authentication information transmitted by the terminal and a token generated by the network node of the service provider; and
identifying the user and a telephone number of the user based on the first authentication information and the second authentication information, wherein
the transmitting includes using the telephone number to transmit a message including the token to the terminal.

With the above configuration, it is possible to execute secure identity authentication in the communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be implemented by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, notification of information is by no means limited to the aspects/embodiments described in the present disclosure, and other methods may be used as well. For example, the information indication may be performed by physical layer signaling (e.g., DCI (Downlink Control Information), UCI (Uplink Control Information) ), upper layer signaling (e.g., RRC (Radio Resource Control) signaling, MAC (Medium Access Control) signaling, broadcast information (MIB (Master Information Block), SIB (System Information Block) ) ), other signals, or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), 6th generation mobile communication system(6G), xth generation mobile communication system (xG) (xG (x is, for example, an integer, a decimal number)), FRA (Future Radio Access), NR (new Radio), New radio access (NX), Future generation radio access(FX), W-CDMA (registered trademark), GSM (registered trademark), CDMA2000, UMB (Ultra Mobile Broadband), IEEE 802.11 (Wi-Fi (registered trademark), IEEE 802.16 (WiMAX (registered trademark) ), IEEE 802.20, UWB (Ultra-WideBand), Bluetooth (registered trademark), and other appropriate systems, and a next generation system enhanced, corrected, created, and defined therefrom. A plurality of systems may be combined (for example, a combination of LTE or LTE-A and 5G, and the like) for application.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be implemented by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or radio technologies (infrared, microwave, etc.), at least one of these wired line technologies or radio technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS) ", "Radio Base Station", "Base Station Device", "Fixed Station", "NodeB", "eNodeB (eNB) ", "gNodeB (gNB) ", "Access Point", "Transmission Point", "Reception unit Point", "Transmission/Reception unit Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "radio unit," "remote unit," "mobile device," "radio device," "radio communication device," "remote device," "mobile subscriber station," "access terminal," "mobile terminal," "radio terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. Further, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency domain, the microwave domain, and the light (both visible and invisible) domain.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or". the communication carrier.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

- 10: base station
- 110: transmission unit
- 120: reception unit
- 130: setting unit
- 140: control unit
- 20: terminal
- 210: transmission unit
- 220: reception unit
- 230: setting unit
- 240: control unit
- 30: network node
- 1001: processor
- 1002: memory
- 1003: storage
- 1004: communication apparatus
- 1005: input apparatus
- 1006: output apparatus
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port (IO port)

## Claims

1. A network node comprising:
a transmission unit configured to transmit, to a terminal of a user, first authentication information used in authentication of the user having a line contract;
a reception unit configured to receive, from a network node of a service provider, a message transmission request including second authentication information transmitted by the terminal and a token generated by the network node of the service provider; and
a control unit configured to identify the user and a telephone number of the user based on the first authentication information and the second authentication information, wherein
the transmission unit uses the telephone number to transmit a message including the token to the terminal.

2. The network node according to claim 1, wherein
the message transmission request further includes an electronic signature of the network node of the service provider appended to the second authentication information, and
the control unit confirms whether the service provider is valid based on the electronic signature.

3. The network node according to claim 1, wherein
the message transmission request further includes a decentralized identifier of the service provider, and
the control unit confirms whether the service provider is valid based on the decentralized identifier.

4. The network node according to claim 1, wherein
the transmission unit transmits, to the terminal of the user, third authentication information used in the authentication of the user in which a usage frequency or an expiration date is set,
the reception unit receives, from the network node of the service provider, the message transmission request including fourth authentication information and the token generated by the network node of the service provider, the fourth authentication information being information in which the usage frequency or the expiration date is set by the user, and
the control unit identifies the user and the telephone number of the user based on the third authentication information and the fourth authentication information.

5. The network node according to claim 1, wherein the first authentication information includes information held only by the user.

6. A terminal comprising:
a reception unit configured to receive, from a network node of a communication carrier, authentication information used in authentication of a user having a line contract; and
a transmission unit configured to transmit the authentication information to a network node of a service provider, wherein
the reception unit for receives, from the network node of the communication carrier, a message including a token generated by the network node of the service provider, and
the transmission unit transmits the token to the network node of the service provider.

7. A communication method executed by a network node, the communication method comprising:
transmitting, to a terminal of a user, first authentication information used in authentication of the user having a line contract;
receiving, from a network node of a service provider, a message transmission request including second authentication information transmitted by the terminal and a token generated by the network node of the service provider; and
identifying the user and a telephone number of the user based on the first authentication information and the second authentication information,
wherein
the transmitting includes using the telephone number to transmit a message including the token to the terminal.
